# FASCICULE DE BREVET EUROPEEN

(11) **EP 0 910 752 B1**
(45) Date de publication et mention de la délivrance du brevet: **04.12.2002**
(21) Numéro de dépôt: 98920578.6
(22) Date de dépôt: 07.04.1998
(51) Int. Cl.: F16D 13/50, F16D 13/58, F16D 13/75

(54) **MECANISME D'EMBRAYAGE POUR EMBRAYAGE A FRICTION A FAIBLE EFFORT DE DEBRAYAGE**
KUPPLUNGSMECHANISMUS MIT GERINGEM LÖSEKRAFTBEDARF FÜR EINE REIBKUPPLUNG
CLUTCH MECHANISM FOR FRICTION CLUTCH WITH LOW DECLUTCHING FORCE

(30) Priorité: 07.04.1997 FR 9704213
(43) Date de publication de la demande: 28.04.1999
(73) Titulaire: VALEO EMBRAYAGES, 80009 Amiens Cedex 1 (FR)
(72) Inventeur: THIRION DE BRIEL, Jacques, F-92700 Colombes (FR); GRATON, Michel, F-75020 Paris (FR); DALBIEZ, André, F-95100 Argenteuil (FR)
(74) Mandataire: Gamonal, Didier
(86) Numéro de dépôt international: FR9800698
(87) Numéro de publication internationale: WO98045611

(56) Documents cités:
- EP-A- 0 718 517
- WO-A-98/10201
- DE-A- 4 311 286
- DE-A- 4 326 501
- FR-A- 2 739 159
- GB-A- 943 039

## Description

La présente invention concerne les embrayages à friction à faible effort de débrayage, notamment pour véhicules automobiles, et se rapporte plus particulièrement au mécanisme d'embrayage que comporte un tel embrayage.

Ainsi qu'on le sait, dans un embrayage classique intercalé entre un arbre menant et un arbre mené, un diaphragme prend appui sur le fond d'un couvercle, fixé à un volant d'entraînement en rotation, pour déplacer un plateau de pression en direction dudit volant, formant plateau de réaction, afin de serrer les garnitures de friction d'une friction d'embrayage entre lesdits plateaux de pression et de réaction.

Le volant d'entraînement est solidaire en rotation d'un premier arbre, tel qu'un arbre menant, tandis que la friction d'embrayage présente à sa périphérie interne un moyeu pour son calage en rotation sur un deuxième arbre, tel qu'un arbre mené.

L'embrayage est donc normalement engagé, ou embrayé, avec transmission de couple entre les arbres menant et mené.

Pour désengager, ou débrayer, l'embrayage, il faut, à l'aide d'une butée de débrayage, agir axialement en poussant, dans le cas d'un embrayage du type poussé, sur l'extrémité interne des doigts du diaphragme pour faire pivoter ledit diaphragme et annuler l'effort qu'exerce ce diaphragme sur le plateau de pression mobile axialement afin de libérer les garnitures de friction. Le couple n'est alors plus transmis de l'arbre menant à l'arbre mené, car les garnitures de friction ne sont plus serrées entre les plateaux de pression et de réactions solidaires en rotation du couvercle de forme creuse.

Usuellement, le couvercle, le plateau de pression et le diaphragme forment un ensemble unitaire appelé mécanisme d'embrayage que l'on vient rapporter par son couvercle sur le volant, des languettes élastiques liant en rotation, avec mobilité axiale, le plateau de pression avec le couvercle.

Le diaphragme, ainsi qu'on le sait, est troué centralement et comporte une partie périphérique externe en forme de rondelle Belleville prolongée vers l'intérieur par une partie centrale fragmentée en doigts radiaux par des fentes. Ce diaphragme, par sa partie rondelle Belleville, prend appui sur le couvercle et sur le plateau de pression. Ainsi, le dispositif débrayeur de l'embrayage, qui permet de contrecarrer à volonté l'action des moyens élastiques embrayeurs, est constitué par les doigts du diaphragme sur l'extrémité interne desquels agit la butée de débrayage, tandis que la rondelle Belleville du diaphragme constitue des moyens élastiques embrayeurs à action axiale pour serrer les garnitures de friction entre les plateaux de pression et de réaction et donc solliciter axialement le plateau de pression en direction opposée au fond du couvercle.

A l'état libre, ce diaphragme a une forme tronconique. Une fois montée dans l'embrayage, sa rondelle Belleville est montée sous précontrainte et est plus ou moins aplatie. Lors de l'opération de débrayage, ou désengagement de l'embrayage, on modifie la conicité de sa rondelle Belleville.

Ainsi qu'on le sait, la courbe caractéristique de ce diaphragme, qui représente la force exercée en fonction de la course de débrayage, par exemple ramenée au niveau de l'extrémité interne des doigts du diaphragme, est déterminée par les dimensions de sa rondelle Belleville et par le rapport entre la hauteur du tronc de cône de la rondelle Belleville à l'état libre et l'épaisseur du diaphragme.

Cette courbe caractéristique passe par un maximum.

Ainsi, la force à exercer sur l'extrémité interne des doigts du diaphragme, pendant l'opération de débrayage, augmente jusqu'à un maximum, diminue graduellement jusqu'à un minimum, puis augmente à nouveau.

La différence entre le maximum et le minimum peut être importante. Pour plus de précisions sur cette courbe caractéristique, on se reportera par exemple au document FR-A-1 392 569 ou au document WO 97/19 275.

Dans le document FR-A-1 392 569, on a prévu un dispositif élastique de progressivité pour éviter de passer par le maximum précité lors de la course de débrayage. Ce dispositif est monté en série avec la rondelle Belleville du diaphragme et présente une force élastique notablement inférieure à celle de la rondelle Belleville. Ce dispositif a une course limitée entre une position de précontrainte où sa force est maximum et une position de contrainte où sa force est minimum.

Avec cette disposition, on obtient un effort de débrayage globalement croissant au niveau de la butée de débrayage.

On ne peut obtenir lors de la course de débrayage une assistance aussi grande que souhaitée, le dispositif de progressivité diminuant la charge exercée par le diaphragme sur le plateau de pression du débrayage.

Les courbes de charge du dispositif de progressivité et du diaphragme ont des formes ne permettant pas de les combiner pour obtenir une forte assistance au débrayage, en particulier si l'on veut respecter des courses et efforts de débrayages compatibles avec les commandes de débrayage actuelles. Par ailleurs, la forme de la courbe du dispositif de progressivité évolue très rapidement avec la vie de l'embrayage, ceci annulant d'autant plus l'assistance au débrayage que le niveau d'assistance demandé est élevé. Pour éviter le vieillissement de la courbe du dispositif d'assistance, il est préférable de placer celui-ci en un endroit où sa courbe de raideur restera stable dans le temps, et, en particulier, en un endroit placé en dehors de la zone de progressivité de la friction où le contact garnitures et le phénomène d'incrustations évoluent et font évoluer la courbe de progressivité.

On peut alors songer à faire intervenir un ressort d'assistance en parallèle avec le diaphragme. Dans ce cas, le ressort d'assistance, par exemple en forme de rondelle Belleville, peut prendre appui sur le couvercle et sur l'extrémité interne des doigts du diaphragme.

En position embrayage engagé, il peut alors exercer une force minimum, puis, sa conicité variant, exercer une force d'assistance lors de l'opération de débrayage. Il faut donc que cette force d'assistance soit minimum en position embrayage engagé tout au long de la durée de vie de l' embrayage.

L'idéal pour ce type de réalisation est de faire appel à un dispositif de réglage, dit dispositif de rattrapage d'usure, qui maintient le diaphragme toujours globalement dans la même position, quelle que soit l'usure des garnitures de friction de l'embrayage et/ou des faces de friction des plateaux de pression et de réaction, pour que le ressort d'assistance exerce, en toute circonstance lors de la durée de vie de l'embrayage, une très faible force lorsque l'embrayage est en position engagée ou embrayée. L'obtention de l'assistance n'est donc pas aussi simple que souhaitée.

Dans le certificat d'addition 86 983 au brevet français 1 392 569, on a déjà proposé d'interposer, entre la rondelle élastique du diaphragme et le plateau de pression, une rondelle élastique auxiliaire, lesdites deux rondelles élastiques étant placés en série ; la rondelle élastique auxiliaire permet une certaine progressivité de l'engagement de l'embrayage et procure un certain effort d'assistance lors de son désengagement.

Le document DE 43 26 501 A montre un mécanisme d'embrayage comportant deux rondelles Belleville placés en série.

La présente invention a pour objet de créer, de manière simple et économique, un embrayage à friction à faible effort de débrayage faisant appel également à des ressorts agissant en série sans diminuer notablement, tout au long de la durée de vie de l'embrayage, la force de serrage des garnitures de friction à l'état embrayage engagé.

Suivant l'invention, un mécanisme d'embrayage pour embrayage à friction, notamment pour véhicule automobile, comportant un couvercle de forme creuse avec un fond d'orientation transversale et des moyens de fixation pour fixation du macanisme d'embrayage sur un volant d'entraînement en rotation, un plateau de pression présentant frontalement une face de friction pour coopération avec une friction d'embrayage, des languettes élastiques pour liaison en rotation, avec mobilité axiale, du plateau de pression avec le couvercle, et, interposés entre la face dorsale du plateau de pression et le fond du couvercle, d'une part, des moyens élastiques embrayeurs à action axiale sollicitant axialement le plateau de pression en direction opposée du fond du couvercle et, d'autre part, un dispositif débrayeur pour contrecarrer à volonté l'action desdits moyens élastiques embrayeurs, lesdits moyens élastiques embrayeurs comportent deux rondelles Belleville montées en série entre la face dorsale du plateau de pression et le couvercle, et caractérisé par le fait que l'une des rondelles Belleville, dite première rondelle Belleville, est en contact par sa périphérie externe avec le plateau de pression, tandis que l'autre des rondelles Belleville, dite seconde rondelle Belleville, s'appuie par sa périphérie externe sur le couvercle, lesdites rondelles étant inclinées en sens inverse, des moyens de transmission d'effort étant intercalés entre les périphéries internes des première et seconde rondelles Belleville, les moyens transmission d'effort étant portés par le dispositif débrayeur.

Avantageusement, les moyens de transmission d'effort consistent en un jonc, fragmenté ou non.

De préférence, la seconde rondelle Belleville est choisie pour exercer une action prépondérante par rapport à la première rondelle Belleville.

Avantageusement, en valeur absolue, la raideur de la seconde rondelle Belleville est supérieure à la raideur de la première rondelle Belleville. Ceci tient compte de la présence de moyens élastiques de progressivité entre les deux garnitures de friction de la friction d'embrayage.

Avantageusement, la seconde rondelle Belleville développe une charge maximum supérieure en valeur absolue à celle développée par la première rondelle Belleville.

De préférence, les rondelles Belleville sont maintenues en contact avec les moyens de transmission d'effort par une pince élastique, éventuellement fractionnce, venant en prise avec les faces externes des rondelles Belleville.

Avantageusement, selon une forme de réalisation, le dispositif débrayeur comprend un plateau transversal portant à sa périphérie externe les moyens de transmission d'effort et relié par sa périphérie interne à un manchon monté coulissant axialement.

Selon une variante, le dispositif débrayeur comprend un disque annulaire portant dans sa partie radialement médiane les moyens de transmission d'effort et présentant, à sa périphérie externe, des pattes traversant des ouvertures ménagées dans une jupe périphérique cylindrique que présente le couvercle, les pattes du disque annulaire étant adaptées à prendre appui sur un bord de ces ouvertures lorsque la partie voisine de sa périphérie interne du disque annulaire est déplacée axialement.

Selon une autre variante, le dispositif débrayeur comprend un disque comportant une partie annulaire prolongée vers l'axe par une partie centrale fragmentée en doigts radiaux par des fentes, les moyens de transmission d'effort étant placés à la périphérie externe de ladite partie annulaire ellemême montée à articulation à la périphérie interne du fond du couvercle.

Avantageusement, le mécanisme est équipé d'un dispositif de rattrapage d'usure d'au moins des garnitures de la friction d'embrayage.

De préférence, le dispositif de rattrapage d'usure est actionné par la première rondelle Belleville.

Avantageusement, le plateau de pression présente dorsalement un bossage pour appui de la périphérie externe de la première rondelle Belleville et une butée située radialement en-dessous dudit bossage pour limiter l'inclinaison de ladite première rondelle Belleville.

Avantageusement, la première rondelle Belleville est soumise à l'action d'au moins un crochet élastique fixé au plateau de pression, la périphérie externe de ladite première rondelle Belleville étant pincée entre le bossage du plateau de pression et ledit crochet.

De préférence, le fond du couvercle porte une butée située radialement en dessous de l'appui sur le couvercle de la seconde rondelle Belleville pour limiter l'inclinaison de ladite rondelle.

La description qui va suivre illustre l'invention en regard des dessins annexés dans lesquels :
- la figure 1 est une demi-vue en coupe axiale d'un embrayage selon l'invention en position embrayage engagé ;
- la figure 2 est une demi-vue en coupe axiale montrant un embrayage du genre de celui de la figure 1 équipé d'un dispositif de rattrapage d'usure ;
- la figure 3 est une demi-vue en coupe montrant une variante d'embrayage selon l'invention ;
- la figure 4 est une demi-vue en coupe montrant encore une autre variante d'embrayage selon l'invention.

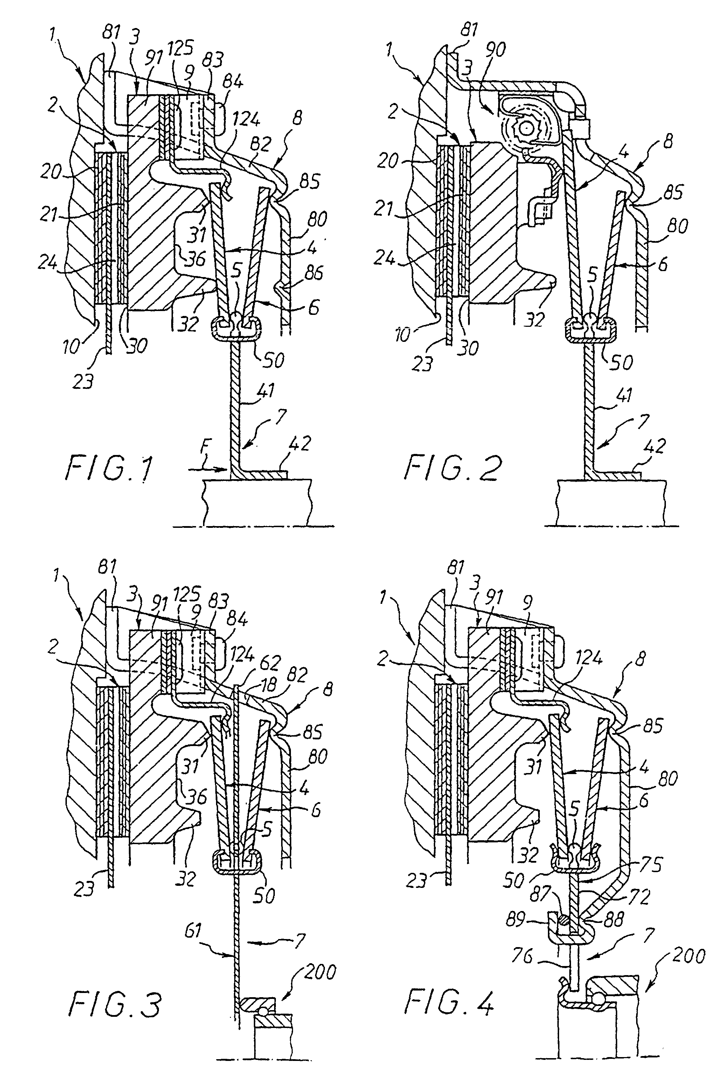

L'embrayage, représenté sur la figure 1, comporte un ensemble de pièces de forme annulaire, à savoir successivement axialement un volant 1 d'entraînement en rotation pour fixation de l'embrayage à un premier arbre, tel qu'un arbre menant, une friction d'embrayage 2 présentant à sa périphérie externe des garnitures de friction 20, 21 et à sa périphérie interne un moyeu non représenté pour liaison en rotation de l'embrayage avec un second arbre tel qu'un arbre mené, un plateau de pression 3, une première rondelle Belleville 4, un jonc d'appui 5, une seconde rondelle Belleville 6 inclinée en sens inverse par rapport à la première rondelle Belleville 4, un dispositif débrayeur 7, un couvercle 8 de forme creuse présentant un fond 80 globalement d'orientation transversale troué centralement et, à sa périphérie externe, des moyens de fixation 81 pour fixation du couvercle 8 au volant 1 formant plateau de réaction.

Le volant 1 présente dorsalement une face de friction 10 et est représenté ici partiellement, sachant que de manière connue il présente centralement des trous pour sa fixation à l'aide de vis à l'arbre menant. Ici le volant 1 est d'un seul tenant en étant en matière moulable tout comme le plateau de pression 3 qui présente frontalement une face de friction 30 en regard de la face de friction 10 du volant 1.

Le volant 1 et le plateau de pression 3 sont ici en fonte.

La friction d'embrayage 2 présente également un disque de support 23 pour porter les garnitures de friction 20, 21, éventuellement fractionnées.

Ces garnitures 20, 21 s'étendent de part et d'autre du disque de support 23 en étant fixées à celui-ci par exemple par rivetage. Ici, les garnitures 20, 21 sont fixées par collage ou brasage au disque de support 23 métallique.

De manière connue, des moyens élastiques de progressivité 24 à action axiale sont interposés entre les deux garnitures 20, 21 pour serrage progressif de celles-ci entre le volant 1 et le plateau de pression 3. Ces moyens peuvent avoir toute forme appropriée. Ici, ces moyens 24 sont réalisés en conformant le disque de support 23. Ce disque, à titre non limitatif, peut présenter une partie centrale pour sa liaison, de manière élastique ou non, au moyeu et une partie périphérique fragmentée en pales radiales, par exemple du type tripode. Chaque pale présente alors une zone centrale de portée destinée à la fixation de l'une des garnitures de friction 20, 21 et deux zones périphériques externes de portée destinées à coopérer avec l'autre des garnitures de friction 20, 21.

Les zones de portée sont décalées axialement par rapport à la partie centrale du disque 23, la zone centrale de portée, de grande étendue, étant reliée à ladite partie centrale par un pli tangentiel, tandis que les zones de portées périphériques sont reliées à ladite zone centrale de portée par des plis obliques. Pour plus de précisions, on se reportera au document US-A-5 452 783 montrant également un mode de réalisation avec des garnitures de friction fractionnées en plots. Les garnitures de friction peuvent être fixées par rivetage et/ou collage sur les zones centrales de portée.

Comme mentionné ci-dessus, le disque 23 peut être accouplé de manière élastique au moyeu. En variante, le disque 23 est accouplé de manière rigide au moyeu, le volant 1 étant alors divisé pour présenter deux masses accouplées de manière élastique entre elles par des ressorts à action circonférentielle ou radiale.

En variante, le volant 1 peut être en deux parties et comporter un flasque de support fixé à sa périphérie interne à l'arbre menant et à sa périphérie externe à un plateau de réaction présentant la face de friction 10. Le couvercle 8 peut être alors assemblé au volant 1 en deux parties à l'aide de pattes d'orientation axiale issues de sa jupe périphérique cylindrique 82. Ces pattes, en forme de tenons, sont alors engagées dans des mortaises formées à la périphérie externe du plateau de réaction ou du flasque de support. Le tronçon libre des pattes, formant les moyens de fixation 81 précités du couvercle 8, peut être fixé par sertissage, rabattement ou soudage, au flasque ou au plateau de réaction, comme décrit par exemple dans la demande de brevet français FR-A-2 741 917 déposée le 24 octobre 1995.

Ici, le couvercle 8 a une forme classique et les moyens de fixation 81 consistent en un rebord radial du couvercle 8, dirigé radialement en direction opposée à l'axe de symétrie axial de l'embrayage, ledit rebord 81 étant doté de trous non visibles pour montage d'organes de fixation du rebord 81 au volant 1, tels que des vis ou, en variante, des rivets.

S'agissant d'une application pour véhicule automobile, l'arbre menant est ici l'arbre moteur du véhicule sur le vilebrequin duquel se fixe le volant 1, tandis que l'arbre mené consiste en l'arbre d'entrée de la boîte de vitesses.

Bien entendu, il est possible d'inverser les structures, le premier arbre pouvant être un arbre mené et le deuxième arbre un arbre menant.

Sur cette figure, le plateau de pression 3 est lié en rotation avec le couvercle 8 par des languettes élastiques 9 permettant au plateau de pression 3 de se déplacer axialement par rapport au couvercle 8. Le plateau de pression 3 est donc solidaire en rotation du couvercle 8 et du volant 1, tout en étant mobile axialement par rapport à ceux-ci.

Les languettes 9 sont ici d'orientation tangentielle et sollicitent le plateau de pression 3 en direction du fond 80 du couvercle. Ces languettes 9 élastiques sont donc à action axiale et ont une action de rappel. En variante, les languettes peuvent être d'orientation radiale.

Ici, la jupe cylindrique externe 82 du couvercle 8, reliant le fond 80 au rebord radial de fixation 81, est trouée localement pour passage de pattes 91, que présente en saillie radiale le plateau de pression 3. Les languettes 9 tangentielles sont fixées à l'une de leurs extrémités aux pattes 91 et à leur autre extrémité à une plage radiale 83 du couvercle. Ces languettes 9 sont réparties régulièrement circonférentiellement, de manière connue ; leur nombre, ainsi que celui des pattes 91, dépend des applications, sachant que, pour les véhicules de tourisme, on fait généralement appel à trois languettes 9 ou groupes de languettes.

La fixation de ces languettes 9 sur les plages 83 et sur les pattes 91 est réalisée à l'aide d'organes de fixation 84, usuellement des rivets, en variante des vis ou des boulons. Ici, on ne voit pas le rivet 84 associé à la patte 91 car celle-ci est large circonférentiellement pour fixation d'un crochet de rappel 124 attelant la première rondelle Belleville 4 au plateau de pression 3 ; la fixation des crochets 124 (un par patte 91) est réalisée à l'aide de rivets 125, en variante des vis ou des boulons.

Plus précisément, la première rondelle 4 s'appuie à sa périphérie externe sur un bossage annulaire 31, ici fractionné, que présente le plateau de pression 3 sur sa face dorsale 36.

Le bossage 31 a une forme pointue avec un sommet arrondi pour contact local avec la périphérie externe de la première rondelle 4 pincée entre ledit bossage 31 et les crochets 124, ici métalliques et élastiques. Ces crochets 124 présentent à leur extrémité une forme bombée pour contact ponctuel, en regard du bossage 31, avec ladite rondelle 4. Cette rondelle 4 est inclinée, en direction du couvercle 8, sa concavité étant dirigée vers le plateau de pression 3.

La deuxième rondelle Belleville 6 s'appuie à sa périphérie externe sur un appui 85, fractionné ou non, ici un embouti qui ménagé dans le fond 80 du couvercle 8 et dirigé axialement vers le plateau de pression 3. La deuxième rondelle Belleville 6 est inclinée en direction du plateau de pression 3, en sens inverse de la première rondelle 4, sa concavité étant dirigée vers le fond 80 du couvercle 8.

Les deux rondelles Belleville 4 et 6 ont ainsi en coupe une forme en V en étant en contact à leur périphérie interne avec un jonc annulaire 5 de transmission d'effort intercalé entre celles-ci.

Avantageusement, les rondelles 4 et 6 sont creusées localement pour recevoir le jonc 5. La face externe de ces rondelles 4 et 6 est rainurée pour maintien d'une pince 50 en forme de U, dont les extrémités libres des branches sont d'orientation axiale. La pince 50 s'étend par son fond radialement en dessous des rondelles 4 et 6.

La pince 50, ici de forme annulaire, est élastique et serre élastiquement les rondelles 4 et 6 au contact du jonc 5 en étant en contact par ses branches avec la face externe desdites rondelles. Cette pince peut en variante être fractionnée en clips. En fonction de l'inclinaison des rondelles 4 et 6, la pince s'ouvre ou se referme.

Le dispositif débrayeur 7 comprend un plateau transversal 41 portant à sa périphérie externe le jonc annulaire 5 de transmission d'effort ; le plateau transversal 41 est relié par sa périphérie interne à un manchon 42 monté coulissant axialement.

Ce dispositif débrayeur 7 est prévu pour contrecarrer et surmonter à volonté l'action élastique des rondelles Belleville 4 et 6 en vue de desserrer à volonté les garnitures de friction 20, 21 et la friction d'embrayage 2 d'entre le plateau de pression 3 et le plateau de réaction 1 afin de désengager l'embrayage.

Les rondelles Belleville 4 et 6 permettent de serrer lesdites garnitures 20, 21 entre les plateaux 1 et 3 et constituent des moyens embrayeurs à action axiale sollicitant le plateau de pression en direction opposée au fond 80 du couvercle 8.

Le manchon 42 du dispositif débrayeur 7 peut être déplacé, en vue de l'opération de débrayage, dans un sens ou dans l'autre, c'est-à-dire dans le sens de la flèche F, l'embrayage étant du type tiré, ou de sens contraire à celui de la flèche F, l'embrayage étant du type poussé : ceci dépend du choix des caractéristiques relatives des première 4 et seconde 6 rondelles Belleville.

Plus précisément, dans les conditions décrites ci-après, l'une des rondelles Belleville assure le serrage de l'embrayage et est désignée ci-dessous par rondelle de serrage ; l'autre rondelle Belleville assure une assistance au débrayage et est désignée ci-dessous par rondelle d'assistance.

La rondelle de serrage, à la manière de la partie rondelle Belleville d'un diaphragme, est telle que la charge qu'elle procure croît avec la hauteur du tronc de cône qu'elle représente ; la rondelle d'assistance est telle que la charge qu'elle procure, tout en étant bien entendu inférieure à celle que procure la rondelle de serrage, décroît avec la hauteur de son tronc de cône ; les deux rondelles travaillant dans la zone de leur courbe caractéristique charge écrasement pratiquement linéaire, on voit qu'en choisissant des rondelles dont les courbes sont, dans ces zones, pratiquement parallèles, l'effort de débrayage, qui à chaque position du dispositif débrayeur est égal, ou proportionnel, à la différence des charges des rondelles, est faible et pratiquement constant ; en variante, si la raideur de la rondelle de serrage est plus grande que celle de la rondelle d'assistance, on peut obtenir un effort de débrayage faible mais croissant légèrement avec la course de débrayage. Ces courbes caractéristiques doivent bien entendu tenir compte de l'existence, quand il y en a, de l'effort dû aux moyens élastiques de progressivité 24 de la friction 2, et théoriquement de l'effort dû aux languettes élastiques 9 mais celui-ci est négligeable, ces efforts, comme on le sait, agissant dans le sens du débrayage et participant à l'assistance au débrayage. Pour plus de précisions, on se reportera au document WO 97/19 275 (figure 4). Ainsi, la rondelle de serrage est une rondelle négative utilisée au delà du maximum de la courbe caractéristique d'une rondelle Belleville et la rondelle d'assistance, une rondelle positive utilisée entre l'origine et le maximum de la dite courbe.

La figure 1 montre le cas d'un embrayage tiré, c'est-à-dire que le débrayage est obtenu en agissant, au niveau du manchon 42, dans le sens de la flèche F; la seconde rondelle Belleville 6 est ici la rondelle d'assistance et la première rondelle 4 est la rondelle de serrage.

Sur la figure 1, l'embrayage est représenté embrayé sous la charge de la seconde rondelle Belleville 6, transmise au plateau de pression 3, via les moyens de transmission d'effort 5, ici en forme de jonc, par la première rondelle Belleville 4 en appui par sa périphérie externe sur le bossage annulaire 31 et par sa périphérie interne sur la butée annulaire 32.

Lors d'une action sur le manchon 42 dans le sens de la flèche F, la rondelle d'assistance 6 est en quelque sorte comprimée, sa charge exercée augmentant et sa périphérie interne étant rapprochée du fond 80 du couvercle 8 ; cette compression est assistée par la rondelle de serrage 4 qui libère l'énergie emmagasinée, en position embrayée, sous l'effet de la rondelle d'assistance 6, prépondérante, pendant l'opération d'embrayage. La course de compression de la rondelle de d'assistance 6 est limitée au niveau du dispositif débrayeur 7 ou, comme représenté, par un embouti 86 du fond 80 du couvercle 8 avec lequel la rondelle d'assistance 6 vient coopérer en fin d'opération de débrayage.

On comprendra aisément que pour réaliser un embrayage du type poussé, c'est-à-dire dans lequel l'opération de débrayage est obtenue en agissant sur le manchon 42 en sens inverse de celui de la flèche F, il suffit d'échanger les caractéristiques des rondelles 4 et 6 : selon cette variante, donc, la première rondelle Belleville 4 est la rondelle d'assistance et la seconde rondelle Belleville 6 est la rondelle de serrage.

Ici (figure 1), en position embrayée, la rondelle de serrage 4 est à distance de la butée annulaire 32 et la rondelle d'assistance 6 est en appui à la fois sur les emboutis 85 et 86 du fond 80 du couvercle 8 ; la butée annulaire 32 joue ici le rôle de limitation de course de débrayage.

Ainsi qu'on le sait, il est plus aisé de maîtriser la caractéristique de charge d'une rondelle Belleville que celle d'un diaphragme ; dès lors, ici, les caractéristiques des moyens embrayeurs constitués de deux rondelles Belleville 4 - 6 sont aisément maîtrisées et il est possible de faire en sorte que l'effort de serrage de la friction 2 varie peu en fonction de l'usure des garnitures 20, 21 qu'il porte. En cas d'usure des garnitures 20, 21, seule la conicité de la rondelle 6 varie dans le sens de l'augmentation de la hauteur de son tronc de cône ; en faisant travailler cette rondelle de serrage 6, dans la position embrayée, au voisinage de son maximum tout en restant en deçà de ce maximum pour sa position correspondant au maximum de l'usure totale des garnitures, l'effort de serrage fluctue peu.

Si l'on souhaite une meilleure constance de l'effort de serrage, il est possible d'équiper le mécanisme d'embrayage d'un dispositif de rattrapage d'usure tel que le dispositif 90 montré sur la figure 2 ; le dispositif 90 a été décrit en détails dans la demande de brevet français déposé le 23 Décembre 1996 sous le numéro 96 15 865 à laquelle il conviendra de se reporter pour plus d'informations.

Ainsi, l'embrayage de la figure 2 est du type poussé, la rondelle 4 étant la rondelle de serrage et la rondelle 6 étant la rondelle d'assistance. Sur cette figure, on remarque également que, dans la position embrayée qui est celle qui est représentée, la rondelle d'assistance 6 n'est en appui sur le couvercle 8 que par sa périphérie externe ; en effet, ici, la rondelle d'assistance 6 a été comprimée par le rondelle de serrage 4 jusqu'à une valeur qui correspondant à une charge emmagasinée par cette rondelle égale à la charge de la rondelle de serrage 4, les deux rondelles 4 et 6 étant, en quelque sorte, en équilibre ; grâce au dispositif de rattrapage 90, les deux rondelles 4 et 6 gardent la même position, en position embrayée, quelle que soit l'usure des garnitures 20, 21. Bien entendu, on peut inverser les dispositions et faire en sorte que c'est la rondelle 6 qui agit sur le dispositif 90.

Selon la variante de la figure 3, le dispositif débrayeur 7 comprend un disque annulaire 61 portant dans sa partie radialement médiane, par exemple par rivetage, les moyens de transmission d'effort 5 ; les rondelles Belleville 4 et 6 sont placées de part et d'autre du disque annulaire 61 ; celui-ci présente également à sa périphérie externe des pattes 62 traversant des ouvertures 18 ménagées dans la jupe périphérique cylindrique 82 du couvercle 8 ; ces pattes 62 sont adaptées à prendre appui sur un bord de ces ouvertures 18 lorsque la partie voisine de la périphérie interne du disque annulaire 61 est déplacée axialement par une butée de débrayage 200, de la droite vers la gauche par rapport à la figure, en vue d'effectuer l'opération de débrayage, l'embrayage étant ici représenté du type poussé.

On pourrait, bien entendu, comme précédemment, en inversant le rôle des rondelles 4 et 6, réaliser en variante un embrayage du type tiré ayant un dispositif débrayeur en forme de disque, tel que le disque 61.

Selon la variante représentée sur la figure 4, le dispositif débrayeur 7 comprend un disque 75 ayant une partie centrale 76 en forme de doigts séparés par des fentes, cette partie centrale 76 prolongeant une partie annulaire périphérique 72. Ces doigts peuvent être nervurés longitudinalement centralement. La partie annulaire 72 relie entre eux les doigts et consiste en une simple rondelle éventuellement dotée de fentes radiales borgnes débouchant vers l'extérieur afin que cette rondelle n'exerce pas de charge, ou une charge très faible, axialement.

En variante, on peut donner une faible élasticité à la partie périphérique 72 pour améliorer le confort au niveau de la pédale de commande de la butée de débrayage 200 et exercer une action de rappel.

Le disque 75 est monté à articulation à la périphérie interne du fond 80 du couvercle 8, entre deux appuis 87, 88,l'un 87 en forme de jonc, l'autre 88 en forme d'embouti du fond 80 du couvercle 8, entre lesquels il est maintenu grâce à des pattes rabattues 89 du couvercle ; ainsi, comme on le voit, le disque 75 est monté à articulation à la manière d'un diaphragme d'embrayage. Ici, telle qu'est représentée la butée de débrayage 200, l'embrayage est du type tiré mais bien entendu, comme expliqué ci-dessus, il pourrait être facilement transformé en embrayage poussé, en échangeant les rondelles 4 et 6.

Sur les figures, les moyens de transmission d'effort sont en forme de jonc mais bien entendu ils peuvent avoir des formes différentes.

Le plateau de pression 3 présente frontalement une face de friction 30 pour coopération avec la friction d'embrayage et sa face dorsale 36 est conformée pour offrir un appui, grâce au bossage 31, à la première rondelle Belleville 4 et former une butée 32 limitant l'inclinaison de ladite rondelle 4. Cette butée 32, obtenue par moulage, est implantée radialement en dessous du bossage 31, en ayant une hauteur inférieure à celui-ci.

Les moyens élastiques embrayeurs, c'est-à-dire les rondelles Belleville 4 et 6, et le dispositif débrayeur 7 sont intercalés entre le couvercle 8 et le plateau de pression 3 pour former avec ceux-ci, en combinaison avec les languettes 9 et les crochets 124 de rappel, un ensemble unitaire manipulable et transportable appelé mécanisme d'embrayage. C'est ce mécanisme d'embrayage qui est rapporté sur le volant d'entraînement en rotation 1.

On notera qu'ici le couvercle 8 entoure le plateau de pression 3, les rondelles Belleville 4 et 6 et le dispositif débrayeur 7.

## Revendications

1. Mécanisme d'embrayage pour embrayage à friction, comportant un couvercle (8) de forme creuse avec un fond (80) d'orientation transversale et des moyens de fixation (81) pour fixation du mécanisme d'embrayage sur un volant d'entraînement (1) en rotation, un plateau de pression (3) présentant frontalement une face de friction (30) pour coopération avec une friction d'embrayage (2), des languettes élastiques (9) pour liaison en rotation, avec mobilité axiale, du plateau de pression (3) avec le couvercle (8), et, interposés entre la face dorsale (36) du plateau de pression (3) et le fond (80) du couvercle (8), d'une part, des moyens élastiques embrayeurs à action axiale (4, 6) sollicitant axialement le plateau de pression (8) en direction opposée du fond (80) du couvercle (8) et, d'autre part, un dispositif débrayeur (7) pour contrecarrer à volonté l'action desdits moyens élastiques embrayeurs (4, 6), lesdits moyens élastiques embrayeurs (4, 6) comportent deux rondelles Belleville (4, 6) montées en série entre la face dorsale (36) du plateau de pression (3) et le couvercle (8), **caractérisé par le fait que** l'une (4) des rondelles Belleville (4, 6), dite première rondelle Belleville, est en appui par sa périphérie externe avec le plateau de pression (3), tandis que l'autre (6) des rondelles Belleville (4, 6), dite seconde rondelle Belleville, s'appuie par sa périphérie externe sur le couvercle (8), lesdites rondelles (4, 6) étant inclinées en sens inverse, des moyens de transmission d'effort (5) étant intercalés entre les périphéries internes des première (4) et seconde (6) rondelles Belleville, les moyens transmission d'effort (5) étant portés par le dispositif débrayeur (7).

2. Mécanisme selon la revendication 1, **caractérisé par le fait que** les moyens de transmission d'effort (5) consistent en un jonc.

3. Mécanisme selon l'une des revendications 1 ou 2, **caractérisé par le fait que** la seconde rondelle Belleville (6) est choisie pour exercer une action prépondérante par rapport à la première rondelle Belleville (4).

4. Mécanisme selon la revendication 3, **caractérisé par le fait que** la raideur de la seconde rondelle Belleville (6) est supérieure à la raideur de la première rondelle Belleville (4).

5. Mécanisme selon l'une des revendications 3 ou 4, **caractérisé par le fait que** la seconde rondelle Belleville (6) développe une charge maximum supérieure en valeur absolue à celle développée par la première rondelle Belleville (4).

6. Mécanisme selon l'une des revendications 1 à 5, **caractérisé par le fait que** les rondelles Belleville (4, 6) sont maintenues en contact avec les moyens de transmission d'effort (5) par une pince élastique (50), éventuellement fractionnée, venant en prise avec les faces externes des rondelles Belleville (4,6).

7. Mécanisme selon l'une quelconque des revendications 1 à 6, **caractérisé par le fait que** le dispositif débrayeur (7) comprend un plateau transversal (41) portant à sa périphérie externe les moyens de transmission d'effort (5) et relié par sa périphérie interne à un manchon (42) monté coulissant axialement.

8. Mécanisme selon l'une quelconque des revendications 1 à 6, **caractérisé par le fait que** le dispositif débrayeur (7) comprend un disque annulaire (61) portant dans sa partie radialement médiane les moyens de transmission d'effort (5) et présentant, à sa périphérie externe, des pattes (62) traversant des ouvertures (18) ménagées dans une jupe périphérique cylindrique (82) que présente le couvercle (8), les pattes (62) du disque annulaire (61) étant adaptées à prendre appui sur un bord de ces ouvertures (18) lorsque la partie voisine de sa périphérie interne du disque annulaire (61) est déplacée axialement.

9. Mécanisme selon l'une quelconque des revendications 1 à 6, **caractérisé par le fait que** le dispositif débrayeur (7) comprend un disque (75) comportant une partie annulaire (72) prolongée vers l'axe par une partie centrale (76) fragmentée en doigts radiaux par des fentes, les moyens de transmission d'effort (5) étant placés à la périphérie externe de ladite partie annulaire (72) elle-même montée à articulation à la périphérie interne du fond (80) du couvercle (8).

10. Mécanisme selon l'une quelconque des revendications 1 à 9, **caractérisé par le fait que** le mécanisme est équipé d'un dispositif de rattrapage d'usure (90) d'au moins des garnitures de la friction d'embrayage (2).

11. Mécanisme selon la revendication 10, **caractérisé par le fait que** le dispositif de rattrapage d'usure (90) est actionné par la première rondelle Belleville (4).

12. Mécanisme selon l'une quelconque des revendications 1 à 11, **caractérisé par le fait que** le plateau de pression (3) présente dorsalement un bossage (31) pour appui de la périphérie externe de la première rondelle Belleville (4) et une butée (32) située radialement en-dessous dudit bossage (31) pour limiter l'inclinaison de ladite première rondelle Belleville (4).

13. Mécanisme selon la revendication 12, **caractérisé par le fait que** la première rondelle Belleville (4) est soumise à l'action d'au moins un crochet (124) élastique fixé au plateau de pression (3), la périphérie externe de ladite première rondelle Belleville (4) étant pincée entre le bossage (31) du plateau de pression (3) et ledit crochet (124).

14. Mécanisme selon l'une des revendications 1 à 13, **caractérisé par le fait que** le fond (80) du couvercle (8) porte une butée (86) pour limiter l'inclinaison de ladite rondelle (6) et que la butée (86) est située radialement en dessous d'un appui (85) du couvercle (8) sur lequel s'appuie par sa périphérie externe la seconde rondelle Belleville (6).

## Patentansprüche

1. Kupplungsmechanismus für eine Reibungskupplung, umfassend einen hohlförmigen Deckel (8) mit einem quer ausgerichteten Boden (80) und Befestigungsmitteln (81) zur Befestigung des Kupplungsmechanismus an einem Drehantriebsschwungrad (1), eine Druckplatte (3), die stirnseitig eine Reibfläche (30) für das Zusammenwirken mit einer Reibungskupplungsscheibe (2) aufweist, elastische Zungen (9) für die, axial bewegliche, drehfeste Verbindung der Druckplatte (3) mit dem Deckel (8) und, eingefügt zwischen der rückseitigen Fläche (36) der Druckplatte (3) und dem Boden (80) des Deckels (8), einerseits axial wirksame elastische Einrückmittel (4, 6), die die Druckplatte (3) in entgegengesetzter Richtung zum Boden (80) des Deckels (8) axial beaufschlagen, und andererseits eine Ausrückvorrichtung (7), um der Wirkung der besagten elastischen Einrückmittel (4, 6) beliebig entgegenzuwirken, wobei die besagten elastischen Einrückmittel (4, 6) zwei Tellerfedern (4, 6) umfassen, die zwischen der rückseitigen Fläche (36) der Druckplatte (3) und dem Deckel (8) in Reihe angeordnet sind, **dadurch gekennzeichnet, daß** eine (4) der Tellerfedern (4, 6), die als erste Tellerfeder bezeichnet wird, mit ihrem äußeren Umfang mit der Druckplatte (3) in Anlage ist, während die andere (6) der Tellerfedern (4, 6), die als zweite Tellerfeder bezeichnet wird, durch ihren äußeren Umfang auf dem Deckel (8) anliegt, wobei die besagten Tellerfedern (4, 6) in entgegengesetzter Richtung geneigt sind, wobei Kraftübertragungsmittel (5) zwischen den inneren Umfängen der ersten (4) und zweiten (6) Tellerfedern eingefügt sind und wobei die Kraftübertragungsmittel (5) an der Ausrückvorrichtung (7) angebracht sind.

2. Mechanismus nach Anspruch 1, **dadurch gekennzeichnet, daß** die Kraftübertragungsmittel (5) aus einem Ring bestehen.

3. Mechanismus nach Anspruch 1 oder 2, **dadurch gekennzeichnet, daß** die zweite Tellerfeder (6) so gewählt wird, daß sie im Verhältnis zur ersten Tellerfeder (4) eine vorherrschende Wirkung ausübt.

4. Mechanismus nach Anspruch 3, **dadurch gekennzeichnet, daß** die Steifigkeit der zweiten Tellerfeder (6) größer als die Steifigkeit der ersten Tellerfeder (4) ist.

5. Mechanismus nach Anspruch 3 oder 4, **dadurch gekennzeichnet, daß** die zweite Tellerfeder (6) eine maximale Belastung entwickelt, die nach dem Absolutwert größer als die durch die erste Tellerfeder (4) entwickelte Belastung ist.

6. Mechanismus nach einem der Ansprüche 1 bis 5, **dadurch gekennzeichnet, daß** die Tellerfedern (4, 6) mit den Kraftübertragungsmitteln (5) durch eine, gegebenenfalls unterteilte, elastische Klemme (50) in Kontakt gehalten werden, die mit den Außenflächen der Tellerfedem (4, 6) in Eingriff kommt.

7. Mechanismus nach einem der Ansprüche 1 bis 6, **dadurch gekennzeichnet, daß** die Ausrückvorrichtung (7) eine Querplatte (41) umfaßt, die an ihrem äußeren Umfang die Kraftübertragungsmittel (5) trägt und die durch ihren inneren Umfang mit einer axial gleitend verschiebbar gelagerten Muffe (42) verbunden ist.

8. Mechanismus nach einem der Ansprüche 1 bis 6, **dadurch gekennzeichnet, daß** die Ausrückvorrichtung (7) eine ringförmige Scheibe (61) umfaßt, die in ihrem radial mittleren Teil die Kraftübertragungsmittel (5) trägt und die an ihrem äußeren Umfang Ansätze (62) aufweist, die durch Öffnungen (18) hindurchgehen, die in eine zylindrische Umfangseinfassung (82) eingearbeitet sind, die der Deckel (8) aufweist, wobei die Ansätze (62) der ringförmigen Scheibe (61) auf einer Kante dieser Öffnungen (18) zur Auflage kommen können, wenn der ihrem inneren Umfang benachbarte Teil der ringförmigen Scheibe (61) axial verschoben wird.

9. Mechanismus nach einem der Ansprüche 1 bis 6, **dadurch gekennzeichnet, daß** die Ausrückvorrichtung (7) eine Scheibe (75) enthält, die einen ringförmigen Teil (72) umfaßt, der zur Achse hin durch einen mittleren Teil (76) verlängert wird, der durch Schlitze in radiale Finger unterteilt ist, wobei die Kraftübertragungsmittel (5) am äußeren Umfang des besagten ringförmigen Teils (72) angebracht sind, der seinerseits am inneren Umfang des Bodens (80) des Deckels (8) angelenkt ist.

10. Mechanismus nach einem der Ansprüche 1 bis 9, **dadurch gekennzeichnet, daß** der Mechanismus mit einer Verschleißnachstellvorrichtung (90) für mindestens einen der Reibbeläge der Reibungskupplungsscheibe (2) ausgerüstet ist.

11. Mechanismus nach Anspruch 10, **dadurch gekennzeichnet, daß** die Verschleißnachstellvorrichtung (90) durch die erste Tellerfeder (4) betätigt wird.

12. Mechanismus nach einem der Ansprüche 1 bis 11, **dadurch gekennzeichnet, daß** die Druckplatte (3) rückseitig einen Vorsprung (31) zur Auflage des äußeren Umfangs der ersten Tellerfeder (4) und einen Anschlag (32) aufweist, der radial innerhalb des besagten Vorsprungs (31) angeordnet ist, um die Neigung der besagten ersten Tellerfeder (4) zu begrenzen.

13. Mechanismus nach Anspruch 12, **dadurch gekennzeichnet, daß** die erste Tellerfeder (4) der Wirkung mindestens eines an der Druckplatte (3) befestigten elastischen Hakens (124) ausgesetzt ist, wobei der äußere Umfang der besagten ersten Tellerfeder (4) zwischen dem Vorsprung (31) der Druckplatte (3) und dem besagten Haken (124) eingeklemmt ist.

14. Mechanismus nach einem der Ansprüche 1 bis 13, **dadurch gekennzeichnet, daß** der Boden (80) des Deckels (8) zur Begrenzung der Neigung der besagten Tellerfeder (6) einen Anschlag (86) trägt, und daß der Anschlag (86) radial innerhalb einer Auflage (85) des Deckels (8) angeordnet ist, auf der die zweite Tellerfeder (6) mit ihrem äußeren Umfang anliegt.

## Claims

1. A clutch actuating mechanism for a friction clutch, comprising a hollow cover plate (8) having a transversely oriented base (80) and fastening means (81) for securing the clutch actuating mechanism on a driving flywheel for rotation therewith, a pressure plate (3) having a front friction face (30) for cooperation with a clutch friction wheel (2), resilient tongues (9) for coupling the pressure plate (3) with the cover plate (8), for rotation with the latter but with axial mobility, and, interposed between the dorsal face (36) of the pressure plate (3) and the base (80) of the cover plate (8), firstly, axially-acting resilient clutch engaging means (4, 6) for biasing the pressure plate (8) axially away from the base (80) of the cover plate (8), and, secondly, a declutching means (7) for counteracting the action of the said resilient clutch engaging means (4, 6) as required, the said resilient clutch engaging means (4, 6) comprising two Belleville rings (4, 6) mounted in series between the dorsal face (36) of the pressure plate (3) and the cover plate (8), **characterised by** the fact that one (4) of the two Belleville rings (4, 6), referred to as the first Belleville ring, is in engagement through its outer periphery with the pressure plate (3), while the other one (6) of the Belleville rings (4, 6), referred to as the second Belleville ring, bears through its outer periphery on the cover plate (8), the said rings (4, 6) being inclined in opposite directions, with force transmitting means (5) being interposed between the inner peripheries of the first Belleville ring (4) and second Belleville ring (6), and the force transmitting means (5) being carried by the declutching means (7).

2. A mechanism according to Claim 1, **characterised by** the fact that the force transmitting means (5) consist of a hoop member.

3. A mechanism according to Claim 1 or Claim 2, **characterised by** the fact that the second Belleville ring (6) is selected to be such as to exert a force which is predominant over that which is exerted by the first Belleville ring (4).

4. A mechanism according to Claim 3, **characterised by** the fact that the stiffness of the second Belleville ring (6) is greater than the stiffness of the first Belleville ring (4).

5. A mechanism according to Claim 3 or Claim 4, **characterised by** the fact that the maximum force developed by the second Belleville ring (6) has an absolute value which is greater than that developed by the first Belleville ring (4).

6. A mechanism according to one of Claims 1 to 5, **characterised by** the fact that the Belleville rings (4, 6) are held in contact with the force transmitting means (5) by a springy gripping member (50), which may be of divided form and which is engaged with the outer faces of the Belleville rings (4, 6).

7. A mechanism according to any one of Claims 1 to 6, **characterised by** the fact that the declutching means (7) comprises a transverse plate (41), carrying the force transmitting means (5) at its outer periphery and coupled at its inner periphery to a sleeve (42) which is mounted for axial sliding movement.

8. A mechanism according to any one of Claims 1 to 6, **characterised by** the fact that the declutching means (7) comprises an annular disc (61) which carries the force transmitting means (5) in the middle, considered in a radial sense, of the disc, and which has at its outer periphery lugs (62) which extend through apertures (18) formed in a cylindrical peripheral skirt portion (82) of the cover plate (8), the lugs (62) of the annular disc (61) being adapted to engage on an edge of the said apertures (18) when the adjacent portion of the inner periphery of the annular disc (61) is displaced axially.

9. A mechanism according to any one of Claims 1 to 6, **characterised by** the fact that the declutching device (7) comprises a disc (75) having an annular portion (72) which is extended towards the axis by a central portion (76) divided into radial fingers by slots, the force transmitting means (5) being located at the outer periphery of the said annular portion (72), which is itself articulated to the inner periphery of the base (80) of the cover plate (8).

10. A mechanism according to any one of Claims 1 to 9, **characterised by** the fact that the mechanism is equipped with a device (90) for compensating for wear in at least the liners of the clutch friction wheel (2).

11. A mechanism according to Claim 10, **characterised by** the fact that the wear compensating device (90) is actuated by the first Belleville ring (4).

12. A mechanism according to any one of Claims 1 to 11, **characterised by** the fact that the pressure plate (3) has a dorsal boss (31) for engagement by the outer periphery of the first Belleville ring (4), and an abutment element (32) situated radially inwards of the said boss (31) whereby to limit the inclination of the said first Belleville ring (4).

13. A mechanism according to Claim 12, **characterised by** the fact that the first Belleville ring (4) is subjected to the action of at least one springy hook (124) which is fixed to the pressure plate (3), the outer periphery of the said first Belleville Ring (4) being gripped between the boss (31) and the said hook (124).

14. A mechanism, according to one of Claims 1 to 13, **characterised by** the fact that the base (80) of the cover plate (8) carries an abutment element (86) for limiting the inclination of the said ring (6), and that the abutment element (86) is situated radially inwards of an engagement element (5) of the cover plate (8) on which the second Belleville ring (6) bears through its outer periphery.
